Europäisches Patentamt

(19) European Patent Office

Office européen des brevets

(11) Publication number: **0 062 641**
**B1**

## (12) EUROPEAN PATENT SPECIFICATION

(45) Date of publication of patent specification: **23.01.85**

(51) Int. Cl.⁴: **C 05 F 3/06, A 47 K 11/00**

(21) Application number: **81901709.6**

(22) Date of filing: **02.06.81**

(86) International application number:
**PCT/FI81/00041**

(87) International publication number:
**WO 81/03487 10.12.81 Gazette 81/29**

(54) **BIOLOGICAL LATRINE.**

(30) Priority: **02.06.80 FI 801777**

(43) Date of publication of application:
**20.10.82 Bulletin 82/42**

(45) Publication of the grant of the patent:
**23.01.85 Bulletin 85/04**

(84) Designated Contracting States:
**AT CH DE FR GB LI NL SE**

(56) References cited:
**WO-A-80/00962**
**DE-A-2 347 194**
**DE-A-2 506 721**
**DE-B-2 541 070**
**FR-A-2 303 776**
**SE-B- 376 229**
**SE-B- 377 796**
**US-A-3 921 228**

(73) Proprietor: **LOUVO, Jarmo**
**Kumputie 5 A**
**SF-45200 Kouvola 20 (FI)**

(72) Inventor: **LOUVO, Jarmo**
**Kumputie 5 A**
**SF-45200 Kouvola 20 (FI)**

(74) Representative: **Zipse + Habersack**
**Kemnatenstrasse 49**
**D-8000 München 19 (DE)**

Courier Press, Leamington Spa, England.

## Description

The object of the present invention is a biological dry latrine suitable for treating biological household waste, comprising a closed chamber provided with watering means for controlling moisture and heating means for controlling temperature and a round bottomed V-shaped trough for said waste within said chamber provided with means for charging all at the same time a suitable medium substance, such as barking waste, peat and sawdust, and means for stirring said waste in said trough together with said medium so that said waste is turned into compost soil or fertilizer mainly through composting.

In the previous art are known several suggestions for dry latrines wherein various covering substances are used. As suitable covering substances are generally recommended peat, sawdust or barking waste. Barking waste consists of such waste from mechanical wood industry which is mainly composed of bark, needles etc. In the previously known latrines based on the use of covering substance, the general principle is that each person adds some covering substance after using the latrine. This practice also causes the drawbacks of the previously known latrines. The adding of the covering substance is inconvenient and unhygienic. There have been attempts to design automatically operated devices for spreading the covering substance, but so far it has not been possible to make these function in a satisfactory way.

Moreover, biological covering-substance latrines do not function satisfactorily even if the dosing of the covering substance is at some stage realized successfully. The decomposing of the waste takes normally place very slowly, if at all. This is due to the fact that in most of the previously known latrines it has not been possible to create such conditions as are necessary for composting the waste.

Other prior art dry latrines e.g. according to WO—A—80/00962 and also according to DE—A—23 47 194 and 25 06 721 comprise a decomposition chamber formed by a round bottomed trough within a casing. Stirring means continuously or intermittently stirs the mass in the chamber, the temperature and moisture being controlled by heating and watering means respectively. The stirring means comprises a plurality of bar-shaped stirring members rotatable about a horizontal axis. The compost is discharged at the bottom of the trough in DE—A—2 347 194 and laterally with respect to the stirrer axis in WO—A—80/00962 and DE—A—2 506 721.

The purpose of the invention is to achieve such a dry latrine where the above mentioned drawbacks, among others, can be avoided, i.e. where the dosing of the medium substance does not cause any problem and where the composting begins rapidly and continues efficiently.

In order to realize this, the biological dry latrine according to the invention is characterized in that said chamber contains sensitive elements for measuring moisture and temperature and a microprocessor, on the basis of the readings obtained from the said sensitive elements, regulates the stirring, watering and heating of the waste material placed in the trough, in such a fashion that the moisture and the temperature of the material are kept within given limits and that the trough is provided with end plates made of perforated metal plate so that between the perforated end plates and the casing of the closed chamber there are left chambers and between the said end plates at the bottom of the trough there is installed a stirring screw and an end plate is provided with a door opening into a passage through which the contents of the trough can be discharged to the outside of the closed chamber.

The dosing of the medium substance does not cause any problem, because the medium is added to the latrine all at the same time in larger units, for example once every two months. The composting begins rapidly and continues efficiently owing to controlled conditions. The composting period is fairly short.

The latrine according to the present invention is convenient to use and hygienic. There are no smell leaks whatsoever, and thus the latrine is well suited to be installed as a normal toilet within the living quarters of any house or appartment.

In the following the invention is explained in detail with reference to the appended drawings.

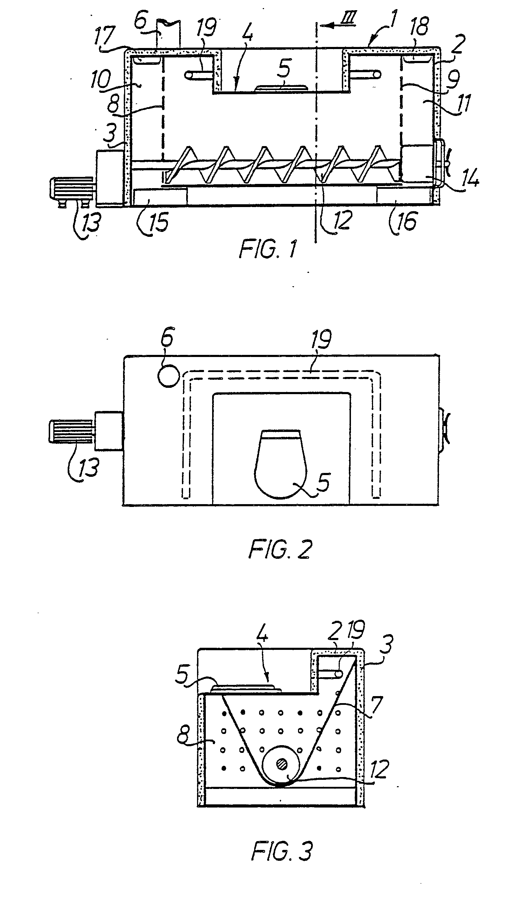

Figure 1 is a schematical view of one preferred embodiment of the invention.

Figure 2 is an illustration of the apparatus of Figure 1 seen from above.

Figure 3 is an illustration of the apparatus of Figure 1 in cross-section along the line III—III.

According to the drawing, the latrine of the invention comprises a closed chamber 1. The casing 2 of the chamber 1 is preferably made of non-corroding steel plate and provided with suitable heat insulation 3. Normally the latrine produces heat and can consequently be employed for heating living facilities, especially as regards larger units.

On the upper surface of the casing 2 there is formed a recess 4, wherein is installed the toilet seat 5. By placing the inlet opening lower than the upper wall of the closed chamber 1, various smells are prevented from entering the room. In order to improve the airing, an airing pipe 6 can be connected to the upper wall of the closed chamber, which airing pipe can comprise means for creating both natural draught and artificial draft.

Within the closed chamber 1 there is located a round-bottomed, V-shaped trough 7. The trough 7 is provided with end plates 8, 9 made of perforated metal plate, so that between the perforated end plates 8, 9 and the casing 2 there are left the chambers 10, 11. At the bottom of the trough 7 there is installed the stirring screw 12. The stirring screw 12 is connected to the combined electric motor and gearing arrangement 13, which arrangement is located outside the chamber 1. The electric motor is of a type which can be operated in both directions. On the outer surface of the trough there are arranged heating resistances, by means of which resistances the temperature of the trough and of the material contained therein can be increased. Simultaneously is heated the air outside the trough, which air enters the trough through the end plates 8, 9.

The other end plate 9 of the trough 7 is provided with a discharge door opening into a passage 14. Through the said passage 14 and by means of the stirring screw 12 it is possible to remove all material contained in the trough 7 from inside the chamber 1.

Underneath the trough 7 there is left a space where are installed the removable containers 15, 16. Into these containers is collected such fine-grained or liquid material which in the stirring phase trickles through the perforated plates 8, 9. In the upper part of the closed chamber 1, near the end plates, are installed the UV-lamps 17, 18. By means of these lamps the material trickled through the perforate plates 8, 9 is sterilized. Air is allowed to circulate sufficiently through the perforated end plates.

In order to moisten the contents, the upper part of the closed chamber 1 is provided with a perforate curved pipe 19. The water is conducted into the pipe 19 through a magnetic valve, which is not included in the drawing. In the drawing are neither included the moisture-sensitive element and the heat-sensitive element, by means of which elements the conditions within the closed chamber 1 are controlled. The readings obtained from the sensing elements are further transmitted to a microprocessor (not presented in the drawing), which controls the conditions within the chamber 1. The microprocessor controls the operation of the stirring screw 12 and of the fan connected to the airing pipe 6, and regulates the watering which takes place through the pipe 19, as well as the heating of the trough 7, in a fashion which is explained in more detail below.

The latrine is used in the following way. Before use an adequate quantity of a suitable medium substance, for example barking waste, is placed in the trough 7. In practice, in a latrine designed for the use of one household, a suitable amount is for example 120 liters. The said amount of barking waste is sufficient for two months' normal use, and no more is added in the meantime. Now the microprocessor starts controlling the conditions within the chamber 1. Simultaneously it automatically regulates the stirring of the material located in the trough 7, by means of the stirring screw 12. The apparatus is programmed so that after each separate use of the latrine, an automatic stirring follows. In addition to this, the material is automatically stirred for example once every hour. The stirring is carried out by rotating the stirring screw 12 back and forth.

The stirring which takes place immediately after use prevents the forming of any smell. The main purpose of the stirring, however, is to spread the waste material by means of the medium substance in such a fashion as to obtain a surface with maximum width. Therefore the quality of the medium substance as such is unimportant, as long as it offers suitable grained lumps, on the surface of which the waste material can be spread.

The microprocessor compares the readings obtained from the moisture- and heat-sensitive elements to the given moisture and temperature limits. Before measuring, the mass of material is always stirred, so as to make the conditions roughly equal at every point. If the mass is too moist, the fan located in the pipe 6 and the heating of the trough 7 are switched into operation. These are kept in operation until the measuring gives readings which fit within the given moisture limit. If, on the other hand, the mass is too dry or its temperature too high, the watering is started for a certain period. After stirring, a new measuring is carried out. The watering is continued until the measuring gives acceptable readings.

In the above described manner it is possible to maintain more or less standard conditions within the latrine. Therefore composting takes place totally and relatively rapidly. Normally the decomposition of the said 120 liters barking waste requires roughly two months. It is advantageous for the composting that also cooking waste is thrown into the latrine. Thus the carbon/nitrogen balance, which is important for the composting, is better maintained. When the compost portion is ready, the discharge door is opened and the compost soil is removed by means of the stirring screw 12 through passage 14.

**Claims**

1. A biological dry latrine suitable for treating biological household waste, comprising a closed chamber (1) provided with watering means for controlling moisture and heating means for controlling temperature, and a round bottomed V-shaped trough (7) for said waste within said chamber provided with means for charging all at the same time a suitable medium substance, such as barking waste, peat and sawdust, and means (12) for stirring said waste in said trough together with said medium so that said waste is turned into compost soil or fertilizer mainly through composting, characterized in that said chamber (1) contains sensitive elements for measuring moisture and temperature and a microprocessor, on the basis of the reading obtained from the said sensitive elements, regulates the stirring, watering and heating of the waste material placed in the trough (7) in such a fashion that the moisture and the temperature of the material are kept within given limits, and that a trough (7) is provided with end plates (8, 9) made of perforated metal plate so that between the perforated end plates (8, 9) and a casing (2) of the closed chamber (1) there are left chambers (10, 11) and between the said end plates at the bottom of the trough (7) there is installed a stirring screw (12) and an end plate (9) is provided with a door opening into a passage (14) through which the contents of the trough can be discharged to the outside of the closed chamber.

2. A biological dry latrine of claim 1, characterized in that underneath the trough (7) between the end plates (8, 9) and a casing (2) there are fitted removable containers (15, 16).

3. A biological dry latrine of claim 1 or 2, characterized in that the stirring screw (12) is connected to an electric motor (13) of a type which can be operated in both directions.

4. A biological dry latrine of one of claims 1—3, characterized in that on the outer surface of the trough (7) there is arranged at least one heating resistance by means of which the air outside the trough is heated in addition to the trough.

5. A biological dry latrine of claim 4, characterized in that the upper part of the closed chamber (1) is provided with a perforated pipe (19) into which water is conducted through a magnetic valve.

6. A biological dry latrine of claims 4 or 6, characterized in that to the upper wall of the closed chamber (1) there is connected an airing pipe (6), draught of which is controlled by means of the said temperature and/or moisture-sensitive element.

**Patentansprüche**

1. Biologische Trockenlatrine zur Behandlung biologischen Haushaltabfalls, mit einer geschlossenen Kammer (1), die mit Wässerungseinrichtungen zur Steuerung der Feuchtigkeit und mit Heizeinrichtungen zur Steuerung der Temperatur ausgerüstet ist und in ihrem Innern für diesen Abfall eine V-förmige Wanne (7) mit rundum Boden aufweist, die mit Einrichtungen zum Einfüllen ganz auf einmal einer geeigneten Mediumsubstanz wie Rinde, Torf und Sägemehl und mit Einrichtungen (12) zum Umwälzen des Abfalls in dieser Wanne zusammen mit der Substanz versehen ist, so daß der Abfall im wesentlichen durch Kompostieren in Komposterde oder Dünger umgewandelt wird, dadurch gekennzeichnet, daß die Kammer (1) Fühlelemente zum Messen der Feuchtigkeit und der Temperatur enthält, und daß ein Mikroprozessor auf der Basis der von diesen Fühlelementen erhaltenen Messung das Umwälzen, das Wässern und das Beheizen des in der Wanne (7) befindlichen Abfallmaterials derart steuert, daß die Feuchtigkeit und die Temperatur des Materials innerhalb vorgegebener Grenzen gehalten werden, und daß die Wanne (7) mit Stirnplatten (8, 9), hergestellt aus perforiertem Metallblech, versehen ist, so daß zwischen den perforierten Stirnplatten (8, 9) und einer Gehäusewandung (2) der geschlossenen Kammer (1) Kammern (10, 11) verbleiben, und daß zwischen diesen Stirnplatten am Boden der Wanne (7) eine Umwälzschraube (12) installiert ist und eine Stirnplatte (9) mit einer in einen Durchgang (14) mündenden Öffnung versehen ist, durch die der Inhalt der Wanne nach außerhalb der geschlossenen Kammer abgegeben werden kann.

2. Biologische Trockenlatrine nach Anspruch 1, dadurch gekennzeichnet, daß unterhalb der Wanne (7) zwischen den Stirnplatten (8, 9) und einer Gehäusewand (2) wegnehmbare Behälter (15, 16) eingepaßt sind.

3. Biologische Trockenlatrine nach Anspruch 1 oder 2, dadurch gekennzeichnet, daß die Umwälzschraube (12) mit einem in beide Richtungen betreibbaren Elektromotor (13) verbunden ist.

4. Biologische Trockenlatrine nach einem der Ansprüche 1 bis 3, dadurch gekennzeichnet, daß an der Außenfläche der Wanne (7) zumindest ein Heizwiderstand angeordnet ist, mittels dem die Luft außerhalb der Wanne zusätzlich zur Wanne aufgeheizt wird.

5. Biologische Trockenlatrine nach Anspruch 4, dadurch gekennzeichnet, daß der obere Teil der geschlossenen Kammer (1) mit einem perforierten Rohr (19) versehen ist, in das Wasser durch ein Magnetventil geleitet wird.

6. Biologische Trockenlatrine nach Anspruch 4 oder 6, dadurch gekennzeichnet, daß mit der oberen Wand der geschlossenen Kammer (1) ein Lüftungsrohr (6) verbunden ist, dessen Zug mittels dieses temperatur- und/oder feuchtigkeitsempfindlichen Elements gesteuert wird.

**Revendications**

1. Latrines sèches biologiques appropriées au traitement de déchets ménagers biologiques comprenant une chambre fermée (1) présentant des moyens d'arrosage pour contrôler l'humidité et des moyens de chauffage pour contrôler la température, ainsi qu'une cuve (7) en V à fond rond pour lesdits déchets à l'intérieur de ladite chambre comportant des moyens pour charger en une seule fois une substance de support appropriée, telle que des déchets d'écorce, de la tourbe et de la sciure, ainsi que des moyens (12) pour mélanger lesdits déchets dans ladite cuve en même temps que ledit support, de telle sorte que lesdits déchets sont transformés en compost ou en fertilisant, principalement par compostage, caractérisées en ce que ladite chambre (1) contient des éléments sensibles pour mesurer l'humidité et la température, et un microprocesseur, sur la base de lecture obtenue à partir desdits éléments sen- sibles, règle le mélange, l'arrosage et la chauffage de la matière de déchets placée dans la cuve (7), de telle manière que l'humidité et la température de la matière sont maintenues à l'intérieur de limites données, et en ce qu'une cuve (7) comprend des plaques d'extrémité (8, 9) réalisées en tôle métallique perforée de telle manière qu'entre les plaques d'extrémité perforées (8, 9) et une enveloppe (2) de la chambre fermée (1) soient ménagées des chambres (10, 11) et qu'entre lesdites plaques d'extrémité au fond de la cuve (7) soit montée une vis mélangeuse (12), une plaque d'extrémité (9) présentant une ouverture formant porte dans un passage (14) à travers lequel le contenu de la cuve peut être déchargé à l'extérieur de la chambre fermée.

2. Latrines sèches biologiques selon la revendication 1, caractérisées en ce que sous la cuve (7) entre les plaques d'extrémité (8, 9) et une enveloppe (2) sont montés des récipients amovibles (15, 16).

3. Latrines sèches biologiques selon la revendication 1 ou 2, caractérisées en ce que la vis mélangeuse (12) est reliée à un moteur électrique (13) d'un type pouvant être actionné dans les deux directions.

4. Latrines sèches biologiques selon l'une des revendications 1 à 3, caractérisées en ce qu'à la surface supérieure de la cuve (7) est montée au moins une résistance de chauffage au moyen de laquelle l'air à l'extérieur de la cuve est chauffé en plus de la cuve.

5. Latrines sèches biologiques selon la revendication 4, caractérisées en ce que la partie supérieure de la chambre fermée (1) est pourvue d'un tuyau perforé (19) dans lequel de l'eau est amenée par l'intermédiaire d'une vanne magnétique.

6. Latrines sèches biologiques selon l'une des revendications 4 ou 6, caractérisées en ce qu'un tuyau d'aération (6) est relié à la paroi supérieure de la chambre fermée (1), tuyau d'aération dont le tirage est contrôlé au moyen dudit élément sensible à la température et/ou à l'humidité.

FIG. 1

FIG. 2

FIG. 3

1